# EUROPEAN PATENT APPLICATION

(11) **EP 4 773 702 A1**
(43) Date of publication of application: **08.07.2026**
(21) Application number: 24869679.1
(22) Date of filing: 18.04.2024
(51) Int. Cl.: H04W 72/21

(54) **SCHEDULING INFORMATION TRANSMISSION METHOD, SCHEDULING INFORMATION RECEIVING METHOD, COMMUNICATION NODE, AND STORAGE MEDIUM**

(30) Priority: 28.09.2023 CN 202311283602
(71) Applicant: ZTE Corporation, Shenzhen, Guangdong 518057 (CN)
(72) Inventor: TIAN, Kaibo, Shenzhen, Guangdong 518057 (CN)
(74) Representative: Aipex B.V.
(86) International application number: PCT/CN2024/088509
(87) International publication number: WO 2025/066110

(57) **Abstract**

Provided are a scheduling information transmission method, a scheduling information receiving method, a communication node, and a storage medium. The scheduling information transmission method includes the following: Scheduling information is determined, where the scheduling information is used to instruct a first communication node to send data to the space communication node using a target carrier frequency at a target time instant, and the target time instant is a time instant in a process during which the space communication node sends data to a second communication node using the target carrier frequency; and the scheduling information is sent to the first communication node.

## Description

### TECHNICAL FIELD

The present application relates to the field of communication technologies, for example, to a scheduling information transmission method, a scheduling information receiving method, a communication node, and a storage medium.

### BACKGROUND

Most satellite communication systems adopt a Frequency Division Duplexing (FDD) transmission mode. In this transmission mode, uplink and downlink typically require different frequency spectra. However, available spectrum resources have become increasingly scarce with the development of wireless communication to date. For satellite communication systems, factors such as ultra-long-distance transmission result in spectrum utilization far lower than that of terrestrial communication, which further exacerbates the difficulty of allocating new spectra. Adopting a Time Division Duplexing (TDD) transmission mode is an ideal solution to the above problems. However, if the traditional TDD transmission mode is directly applied in a satellite communication system, a large delay caused by ultra-long-distance propagation would significantly reduce the transmission efficiency of the satellite communication system. Therefore, how to perform precise scheduling in the satellite communication system to improve the transmission efficiency of the satellite communication system is an urgent problem to be solved.

### SUMMARY

Embodiments of the present application provide a scheduling information transmission method. The method is applied to a space communication node and includes the following:

Scheduling information is determined, where the scheduling information is used to instruct a first communication node to send data to the space communication node using a target carrier frequency at a target time instant, and the target time instant is a time instant in a process during which the space communication node sends data to a second communication node using the target carrier frequency. The scheduling information is sent to the first communication node.

Embodiments of the present application provide a scheduling information receiving method. The method is applied to a first communication node and includes the following:

Scheduling information sent by a space communication node is received, where the scheduling information is used to instruct the first communication node to send data to the space communication node using a target carrier frequency at a target time instant, and the target time instant is a time instant in a process during which the space communication node sends data to a second communication node using the target carrier frequency.

Embodiments of the present application provide a communication node. The communication node includes a processor that, when executing a computer program, implements the method of any of the preceding embodiments.

Embodiments of the present application also provide a computer-readable storage medium storing a computer program, and when the computer program is executed by a processor, the method of any of the preceding embodiments is implemented.

### BRIEF DESCRIPTION OF DRAWINGS

FIG. 1 is a diagram illustrating the networking of a wireless communication system according to an embodiment.
FIG. 2 is a flowchart of a scheduling information transmission method according to an embodiment.
FIG. 3 is a flowchart of a scheduling information receiving method according to an embodiment.
FIG. 4 is a diagram of an interaction procedure of scheduling information according to an embodiment.
FIG. 5 is a scheduling timing diagram according to an embodiment.
FIG. 6 is a diagram of another interaction procedure of scheduling information according to an embodiment.
FIG. 7 is another scheduling timing diagram according to an embodiment.
FIG. 8 is a diagram of still another interaction procedure of scheduling information according to an embodiment.
FIG. 9 is still another scheduling timing diagram according to an embodiment.
FIG. 10 is a diagram illustrating the structure of a scheduling information transmission apparatus according to an embodiment.
FIG. 11 is a diagram illustrating the structure of a scheduling information receiving apparatus according to an embodiment.
FIG. 12 is a diagram illustrating the structure of a satellite according to an embodiment.
FIG. 13 is a diagram illustrating the structure of a User Equipment (UE) according to an embodiment.

### DETAILED DESCRIPTION

The embodiments described herein are only intended to explain the present application. Embodiments of the present application are described below in conjunction with drawings.

With the development of wireless communication technology, mainstream terrestrial wireless communication systems adopt the TDD transmission mode, such as a Wireless Local Area Network (WLAN) Wi-Fi system and a terrestrial 5th Generation-New Radio (5G-NR) system. The TDD transmission mode helps to solve problems such as scarcity of paired frequency resources and mismatch between uplink and downlink traffic volumes in a system, and is also conducive to implementing massive antenna technologies. In terrestrial wireless communication systems, since the distance between two communication parties is relatively short, usually within a range of tens of meters to several kilometers (km), the signal propagation delay is small. When the TDD transmission mode is used, to avoid interference between transmission and reception, any party in communication is usually required to be in only a receiving state or a transmitting state at the same time instant. Moreover, for the two communication parties, one is in a transmitting state and the other is in a receiving state at the same time instant, and simultaneous transmission or simultaneous reception is not possible.

For a satellite communication system, a satellite is usually at an altitude higher than 300 km above the ground so that the propagation distance between a terminal device and a base station/gateway station reaches more than hundreds of kilometers, and the path propagation delay is more than several milliseconds (ms). Especially in a high-orbit satellite communication system, the propagation distance reaches tens of thousands of kilometers, and the path propagation delay reaches hundreds of milliseconds. For example, for a Low Earth Orbiting (LEO) satellite communication system at an altitude of 600 km, assuming that the minimum communication elevation angle is 10 degrees, a Round-Trip Time (RTT) between the satellite and a terminal device on the ground is 4-13 ms. For a Geostationary Earth Orbiting (GEO) satellite communication system, the RTT between the satellite and a terminal device on the ground even exceeds 200 ms. In contrast, the RTT of a terrestrial cellular network is generally within 1 ms. Therefore, in a satellite communication scenario, if a TDD transmission mode similar to that of a terrestrial wireless communication system is used, with a propagation distance of 600 km, the propagation time of data in space is 2 ms. That is, from the time when the satellite starts sending data to the time when the terminal device on the ground completes reception of the data, a total time of 3 ms is required, and the resource utilization rate is only 1/3.

The scheduling information transmission method and the scheduling information receiving method provided in the present application may be applied to various types of wireless communication systems, such as an Long-Term Evolution (LTE) system, a 4th-generation (4G) mobile communication technology system, a 5G system, an LTE and 5G hybrid architecture system, a 5G-NR system, and a new communication system emerging in future communication development, for example, a 6th-generation (6G) mobile communication technology system. The methods are particularly applicable to ultra-long-distance transmission scenarios based on the preceding systems, such as a satellite communication scenario.

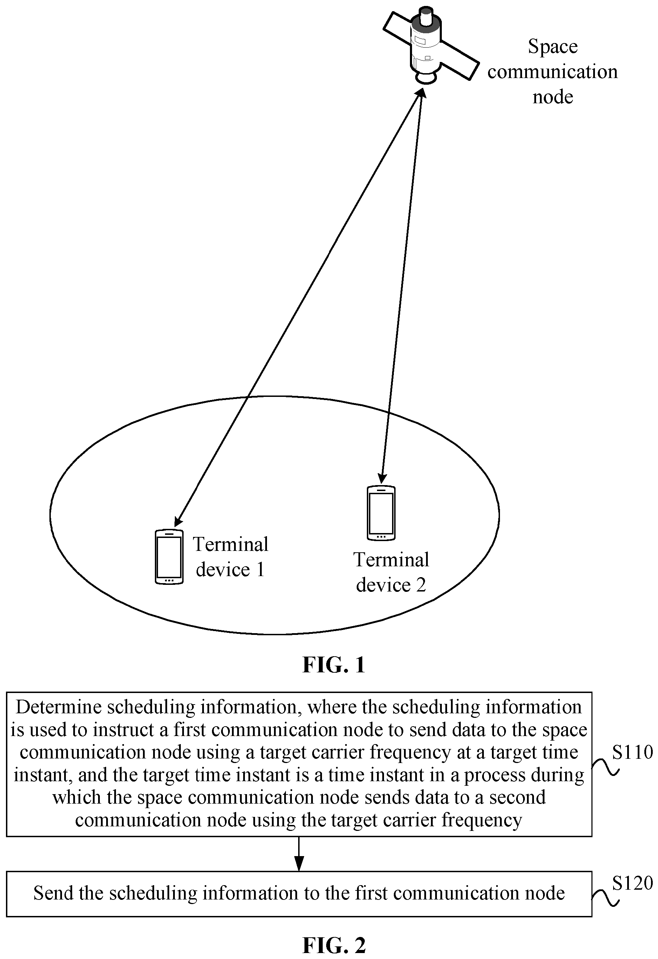

FIG. 1 is a diagram illustrating the networking of a wireless communication system according to an embodiment. As shown in FIG. 1, the wireless communication system includes a space communication node and terminal devices (two terminal devices are used as an example in FIG. 1 and are labeled as terminal device 1 and terminal device 2, respectively). The space communication node can perform bidirectional communication with each terminal device.

The terminal device may be a device having a radio transceiving function. The device may be deployed on land (such as being indoor or outdoor, handled, wearable, or vehicle-mounted) or may be deployed on water (such as in ships). Examples of some terminal devices are as follows: a UE, a mobile phone, a mobile station, a tablet computer, a notebook computer, an Ultra-Mobile Personal Computer (UMPC), a handheld computer, a netbook, a Personal Digital Assistant (PDA), and other user equipment that can be networked; a Virtual Reality (VR) terminal, an Augmented Reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an Internet of Things node in the Internet of Things; an in-vehicle communication apparatus in the Internet of Vehicles; an entertainment and game device or system; or a global positioning system device. The embodiments of the present application do not limit the technology and the device configuration used by the terminal device. Additionally, the terminal device may be referred to as a terminal.

The space communication node is a device having a radio transceiving function and deployed in the air, such as an airplane, a balloon, a satellite, a drone, or an airship. The space communication node may be understood as an access device by which a terminal device accesses the wireless communication system in a wireless manner. The embodiments of the present application impose no limitation on the technology and the device configuration used by the space communication node.

In the embodiments of the present application, a scheduling information transmission method, a scheduling information receiving method, a communication node, and a storage medium that may be applied to the preceding wireless communication system are provided. During the time period in which the space communication node sends data to one terminal device, another terminal device may be scheduled to send data to the space communication node. In this case, no interference between transmission and reception occurs, thereby improving the transmission efficiency of the system.

The scheduling information transmission method, the scheduling information receiving method, the communication node, and the technical effects thereof are described below.

FIG. 2 is a flowchart of a scheduling information transmission method according to an embodiment. As shown in FIG. 2, the method provided in this embodiment is applicable to a space communication node (which may also be referred to as a space communication node device, a space node, or a space device), such as a satellite. The method includes S110 and S120.

In S110, scheduling information is determined. The scheduling information is used to instruct a first communication node to send data to the space communication node using a target carrier frequency at a target time instant, and the target time instant is a time instant in a process during which the space communication node sends data to a second communication node using the target carrier frequency.

In the present application, the first communication node and the second communication node may be terminal devices deployed on land or on water. Generally, one first communication node is provided, and one or more second communication nodes may be provided. The first communication node may be a configured communication node or may be a communication node selected by the space communication node. In addition, when more than one first communication node is provided, each first communication node may be regarded as an individual entity to perform the scheduling solution provided in the present application separately.

In an embodiment, if the first communication node is selected by the space communication node, an operation of selecting the first communication node by the space communication node is performed before S110.

The operation of selecting the first communication node by the space communication node includes acquiring location information related to at least one candidate communication node, determining distance information related to the at least one candidate communication node according to the location information related to the at least one candidate communication node, and determining the first communication node from the at least one candidate communication node according to the distance information related to the at least one candidate communication node; where the location information related to a candidate communication node includes coordinate information of the candidate communication node, and the distance information related to the candidate communication node includes a distance between the candidate communication node and the space communication node; alternatively, the location information related to a candidate communication node includes coordinate information of a candidate communication node and coordinate information of the second communication node, and the distance information related to the candidate communication node includes a distance between the candidate communication node and the space communication node and a distance between the candidate communication node and the second communication node.

In an exemplary implementation, the space communication node may acquire coordinate information of M candidate communication nodes, where M is a positive integer; then determine, according to the coordinate information of the M candidate communication nodes, a distance between each candidate communication node and the space communication node; and determine the first communication node from the M candidate communication nodes according to the distance between each candidate communication node and the space communication node.

In another exemplary implementation, the space communication node may acquire coordinate information of M candidate communication nodes and coordinate information of the second communication node, where M is a positive integer; then determine, according to the coordinate information of the M candidate communication nodes and the coordinate information of the second communication node, a distance between each candidate communication node and the space communication node and a distance between each candidate communication node and the second communication node; and determine the first communication node from the M candidate communication nodes according to the distance between each candidate communication node and the space communication node and the distance between each candidate communication node and the second communication node.

In the present application, the coordinate information of the candidate communication node may be reported by the candidate communication node to the space communication node; similarly, the coordinate information of the second communication node may be reported by the second communication node to the space communication node. The coordinate information may be Global Positioning System (GPS) positioning coordinates, relative coordinates of the communication node relative to the space communication node, or longitude and latitude coordinates. The embodiments of the present application impose no limitation thereon.

In an embodiment, since the scheduling information is used to instruct the first communication node to send data to the space communication node using the target carrier frequency at the target time instant, the space communication node also needs to determine the target time instant. A method for determining the target time instant includes the following: acquiring a third distance, where the third distance is a distance between the first communication node and the second communication node, and determining the target time instant according to the third distance, a first distance, and a first time instant, where the first distance is a distance between the first communication node and the space communication node, and the first time instant is a time instant at which the space communication node receives the data sent by the first communication node.

The third distance determines whether a process in which the first communication node sends data and a process in which the second communication node receives data affect each other. Accordingly, the scenario in which the target time instant is determined according to the third distance, the first distance, and the first time instant may be classified into two types, that is, one is that the process in which the first communication node sends data and the process in which the second communication node receives data do not affect each other, and the other is that the process in which the first communication node sends data and the process in which the second communication node receives data affect each other.

In an exemplary implementation, when the third distance is greater than or equal to a preset threshold, it indicates that the process in which the first communication node sends data and the process in which the second communication node receives data do not affect each other. In this case, the target time instant may be determined only according to the first distance and the first time instant. For example, the target time instant = the first time instant - a first delay, where the first delay is determined according to the first distance.

In another exemplary implementation, when the third distance is less than the preset threshold, it indicates that the process in which the first communication node sends data and the process in which the second communication node receives data affect each other. In this case, the target time instant needs to be determined according to the first distance, a second distance, a preset time interval, and the first time instant, where the second distance is a distance between the second communication node and the space communication node, and the preset time interval is a time interval from a time instant at which the space communication node sends data to the second communication node to a time instant at which the space communication node switches to a receiving state.

In an embodiment, if the target time instant is later than an end time instant at which the second communication node receives the data sent by the space communication node using the target carrier frequency, the preset time interval is greater than or equal to the sum of a first delay, a second delay, and a first data time length; if the target time instant is earlier than a start time instant at which the second communication node receives the data sent by the space communication node using the target carrier frequency, the preset time interval is less than or equal to a difference between the sum of the first delay and the second delay and a second data time length; where the first delay is a communication delay between the first communication node and the space communication node, the second delay is a communication delay between the second communication node and the space communication node, the first data time length is a time length for which the space communication node sends the data to the second communication node using the target carrier frequency, and the second data time length is a time length for which the first communication node sends the data to the space communication node using the target carrier frequency. The second delay is determined according to the second distance.

In the present application, the space communication node may be in any one of a transmitting state, a receiving state, or a switching guard state. Since the target time instant is a time instant in the process during which the space communication node sends data to the second communication node using the target carrier frequency, the space communication node is in the transmitting state at the target time instant.

In S120, the scheduling information is sent to the first communication node.

In an embodiment, the time instant of sending the scheduling information is earlier than a time instant at which the space communication node sends the data to the second communication node using the target carrier frequency.

On the basis of the preceding embodiments, after S120 is performed, the space communication node may also receive the data sent by the first communication node using the target carrier frequency at the target time instant. Correspondingly, when the space communication node receives the data sent by the first communication node, the space communication node is in the receiving state.

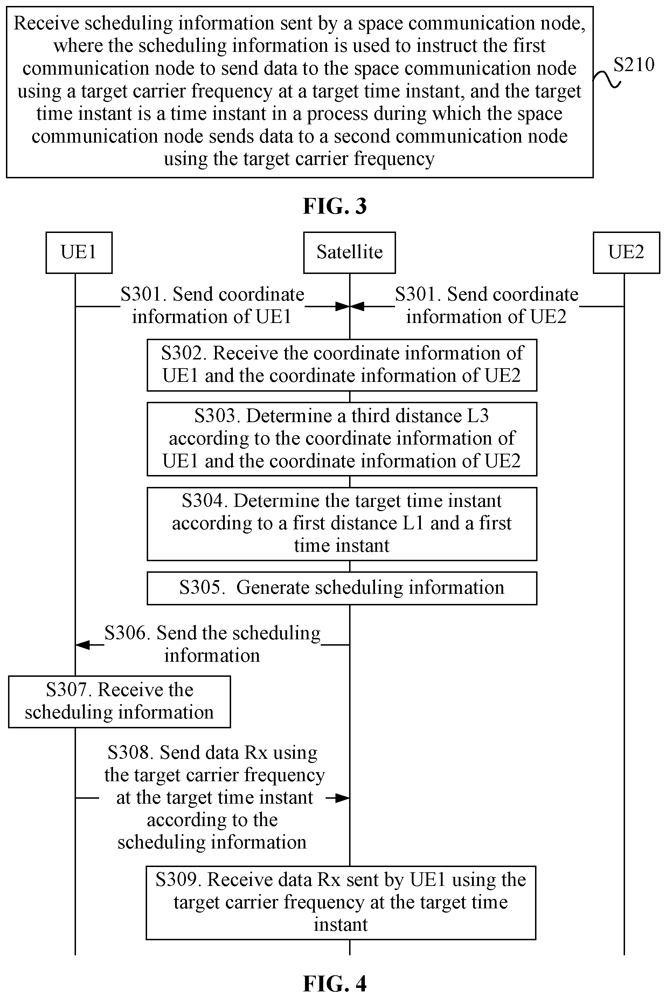

FIG. 3 is a flowchart of a scheduling information receiving method according to an embodiment. As shown in FIG. 3, the method provided in this embodiment is applicable to a first communication node (which may also be referred to as a first communication node device, a first node, or a first device), such as a UE. The method includes S210.

In S210, scheduling information sent by a space communication node is received. The scheduling information is used to instruct the first communication node to send data to the space communication node using a target carrier frequency at a target time instant, and the target time instant is a time instant in a process during which the space communication node sends data to a second communication node using the target carrier frequency.

In the present application, the first communication node and the second communication node may be terminal devices deployed on land or on water. Generally, one first communication node is provided. When more than one first communication node is provided, each first communication node may be regarded as an individual entity to perform the scheduling solution provided in the present application separately.

In an embodiment, before S210 is performed, the first communication node may also send coordinate information of the first communication node to the space communication node so that the space communication node determines, according to the coordinate information of the first communication node, distance information related to the first communication node, such as a distance between the space communication node and the first communication node, and a distance between the first communication node and the second communication node.

In the present application, the coordinate information may be GPS positioning coordinates, relative coordinates of the communication node relative to the space communication node, or longitude and latitude coordinates. The embodiments of the present application impose no limitation thereon.

In an embodiment, after S210 is performed, the first communication node may also send the data to the space communication node using the target carrier frequency at the target time instant according to the scheduling information.

Some examples are provided below to illustrate the scheduling solution provided in the present application. In the following examples, the operation of determining the first communication node by the space communication node is omitted, and reference may be made to the description in the preceding embodiments. Details are not repeated here. Moreover, for illustration, the space communication node is a satellite, the first communication node is UE1, and the second communication node is UE2 in the following examples.

### Example one

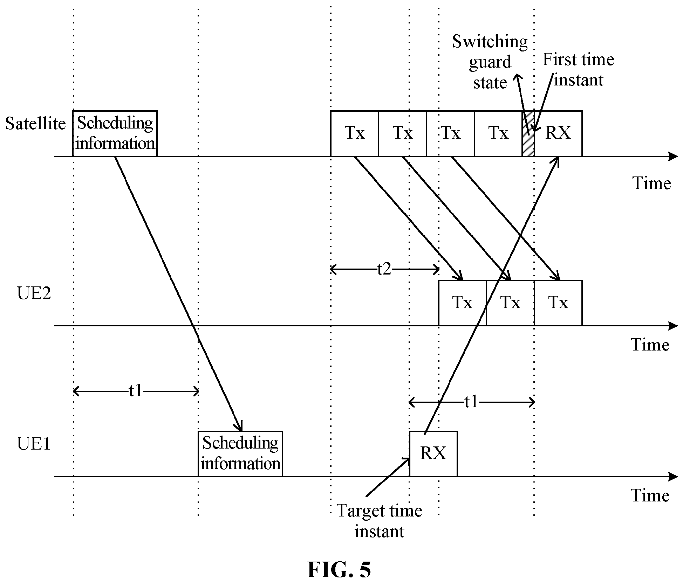

In example one, the process in which UE1 sends data and the process in which UE2 receives data do not affect each other. FIG. 4 is a diagram of an interaction procedure of scheduling information according to an embodiment. FIG. 5 is a scheduling timing diagram according to an embodiment. As shown in FIG. 4 and FIG. 5, the interaction procedure of scheduling information includes S301 to S309.

In S301, UE1 sends coordinate information of UE1 to the satellite, and UE2 sends coordinate information of UE2 to the satellite.

The coordinate information may be GPS positioning coordinates, relative coordinates of the communication node relative to the space communication node, or longitude and latitude coordinates. The embodiments of the present application impose no limitation thereon.

In S302, the satellite receives the coordinate information of UE1 and the coordinate information of UE2.

No temporal precedence exists between the time instant at which UE1 sends the coordinate information of UE1 to the satellite and the time instant at which UE2 sends the coordinate information of UE2 to the satellite. No temporal precedence exists between the time instant at which the satellite receives the coordinate information of UE1 and the time instant at which the satellite receives the coordinate information of UE2.

From the perspective of the satellite, the satellite may be in any one of a transmitting state, a receiving state, or a switching guard state. The switching guard state includes two cases, that is, switching from the transmitting state to the receiving state and switching from the receiving state to the transmitting state. The switching guard state shown in FIG. 5 is the case of switching from the transmitting state to the receiving state.

In S303, the satellite determines a third distance L3 according to the coordinate information of UE1 and the coordinate information of UE2.

The third distance L3 is the distance between UE1 and UE2. Since example one is directed to the scenario where the process in which UE1 sends data and the process in which UE2 receives data do not affect each other, the third distance L3 in example one is greater than or equal to the preset threshold.

In S304, the satellite determines the target time instant according to a first distance L1 and a first time instant.

The first distance L1 is the distance between UE1 and the satellite. The first time instant is the time instant at which the satellite receives data sent by UE1. The target time instant is a time instant in the process during which the satellite sends data Tx to UE2 using the target carrier frequency.

Exemplarily, the target time instant is equal to the first time instant minus a first delay t1, and the first delay t1 is determined according to the first distance L1.

In S305, the satellite generates scheduling information. The scheduling information is used to instruct UE1 to send data RX to the satellite using the target carrier frequency at the target time instant.

In S306, the satellite sends the scheduling information to UE1.

As can be seen from FIG. 5, the time instant of sending the scheduling information is earlier than the time instant at which the satellite sends data Tx to UE2 using the target carrier frequency.

In S307, UE1 receives the scheduling information sent by the satellite.

In S308, UE1 sends data RX to the satellite using the target carrier frequency at the target time instant according to the scheduling information.

In S309, the satellite receives data RX sent by UE1 using the target carrier frequency at the target time instant.

The time instant at which the satellite receives data RX is the first time instant.

As shown in FIG. 5, data Tx is the data sent by the satellite to UE2 using the target carrier frequency, where one or more UE2 may be provided. A second delay t2 represents the communication delay (also referred to as the propagation delay) between the satellite and UE2, and the second delay t2 is determined according to the distance between the satellite and UE2. Data RX is the data sent by UE1 to the satellite using the target carrier frequency. The first delay t1 represents the communication delay between the satellite and UE1, and the first delay t1 is determined according to the first distance L1.

For devices in the wireless communication system other than UE2, since they do not need to receive data Tx, the satellite in the transmitting state may determine UE1 from these devices and schedule UE1.

In this example, the value of the preset threshold may be determined according to the communication environment to ensure that data RX sent by UE1 cannot reach UE2 or the signal strength of the signal reaching UE2 is insufficient to cause interference to UE2 receiving data Tx.

### Example two

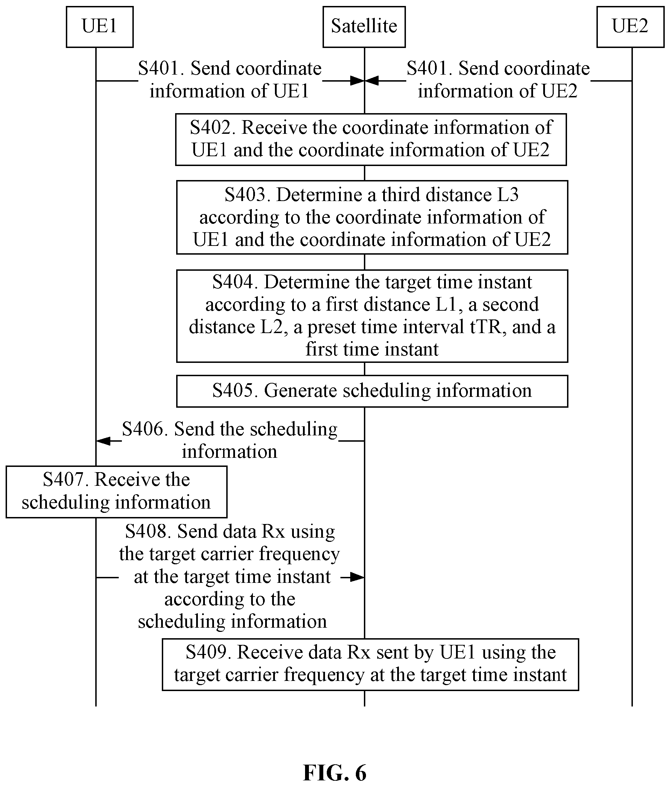

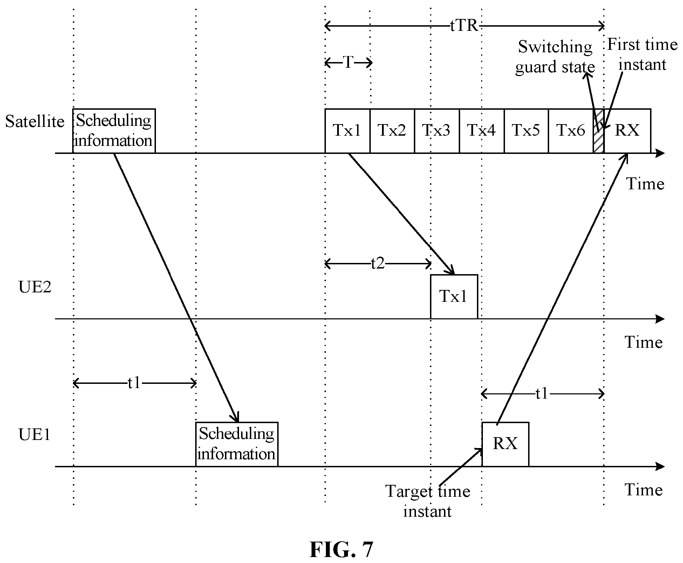

In example two, the process in which UE1 sends data and the process in which UE2 receives data affect each other, and the target time instant is later than the end time instant at which UE2 receives data sent by the satellite using the target carrier frequency. FIG. 6 is a diagram of another interaction procedure of scheduling information according to an embodiment. FIG. 7 is another scheduling timing diagram according to an embodiment. As shown in FIG. 6 and FIG. 7, the interaction procedure of scheduling information includes S401 to S409.

In S401, UE1 sends coordinate information of UE1 to the satellite, and UE2 sends coordinate information of UE2 to the satellite.

The coordinate information may be GPS positioning coordinates, relative coordinates of the communication node relative to the space communication node, or longitude and latitude coordinates. The embodiments of the present application impose no limitation thereon.

In S402, the satellite receives the coordinate information of UE1 and the coordinate information of UE2.

No temporal precedence exists between the time instant at which UE1 sends the coordinate information of UE1 to the satellite and the time instant at which UE2 sends the coordinate information of UE2 to the satellite. No temporal precedence exists between the time instant at which the satellite receives the coordinate information of UE1 and the time instant at which the satellite receives the coordinate information of UE2.

From the perspective of the satellite, the satellite may be in any one of a transmitting state, a receiving state, or a switching guard state. The switching guard state includes two cases, that is, switching from the transmitting state to the receiving state and switching from the receiving state to the transmitting state. The switching guard state shown in FIG. 7 is the case of switching from the transmitting state to the receiving state.

In S403, the satellite determines a third distance L3 according to the coordinate information of UE1 and the coordinate information of UE2.

The third distance L3 is the distance between UE1 and UE2. Since example two is directed to the scenario where the process in which UE1 sends data and the process in which UE2 receives data affect each other, the third distance L3 in example two is less than the preset threshold.

In S404, the satellite determines the target time instant according to a first distance L1, a second distance L2, a preset time interval tTR, and a first time instant.

The first distance L1 is the distance between UE1 and the satellite. The second distance L2 is the distance between UE2 and the satellite. The preset time interval tTR is the time interval from the time instant at which the satellite sends data to UE2 to the time instant at which the satellite switches to the receiving state. The first time instant is the time instant at which the satellite receives data sent by UE1. The target time instant is a time instant in the process during which the satellite sends data Tx1 to UE2 using the target carrier frequency.

Exemplarily, for the scenario where the target time instant is later than the end time instant at which UE2 receives data sent by the satellite using the target carrier frequency, the preset time interval tTR is greater than or equal to the sum of a first delay t1, a second delay t2, and a first data time length T, that is, tTR ≥ t1 + t2 + T.

In S405, the satellite generates scheduling information. The scheduling information is used to instruct UE1 to send data RX to the satellite using the target carrier frequency at the target time instant.

In S406, the satellite sends the scheduling information to UE1.

As can be seen from FIG. 7, the time instant of sending the scheduling information is earlier than the time instant at which the satellite sends data Tx1 to UE2 using the target carrier frequency.

In S407, UE1 receives the scheduling information sent by the satellite.

In S408, UE1 sends data RX to the satellite using the target carrier frequency at the target time instant according to the scheduling information.

In S409, the satellite receives data RX sent by UE1 using the target carrier frequency at the target time instant.

The time instant at which the satellite receives data RX is the first time instant.

As shown in FIG. 7, data Tx1 is the data sent by the satellite to UE2 using the target carrier frequency, where one or more UE2 may be provided. The second delay t2 represents the communication delay (also referred to as the propagation delay) between the satellite and UE2, and the second delay t2 is determined according to the second distance L2. Data Rx is the data sent by UE1 to the satellite using the target carrier frequency. The first delay t1 represents the communication delay between the satellite and UE1, and the first delay t1 is determined according to the first distance L1. The first data time length T is the time length for which the satellite sends data Tx1 to UE2 using the target carrier frequency.

For devices in the wireless communication system other than UE2, since they do not need to receive Tx1, the satellite in the transmitting state may determine UE1 from these devices and schedule UE1.

In this example, the value of the preset threshold may be determined according to the communication environment. Since the process in which UE1 sends data and the process in which UE2 receives data affect each other, the target time instant is set later than the end time instant at which UE2 receives the data sent by the satellite using the target carrier frequency, thereby avoiding the generation of interference.

Similarly, for data Tx2 to data Tx6 in FIG. 7, the methods in example one to example three of this embodiment may be used for processing. For example, when data Tx2 to data Tx6 are data sent to UE3 and the distance between UE3 and UE1 is greater than or equal to the preset threshold, the method of example one in this embodiment may be used for scheduling.

### Example three

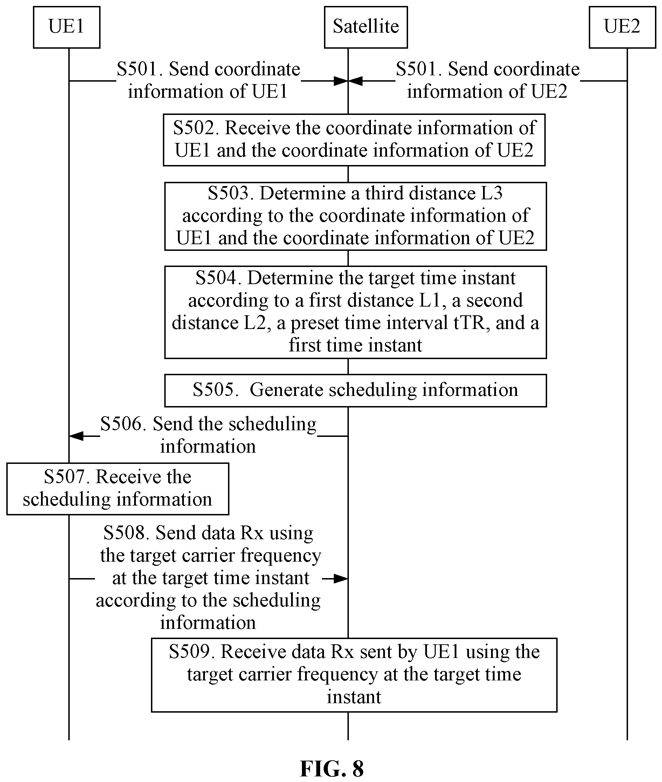

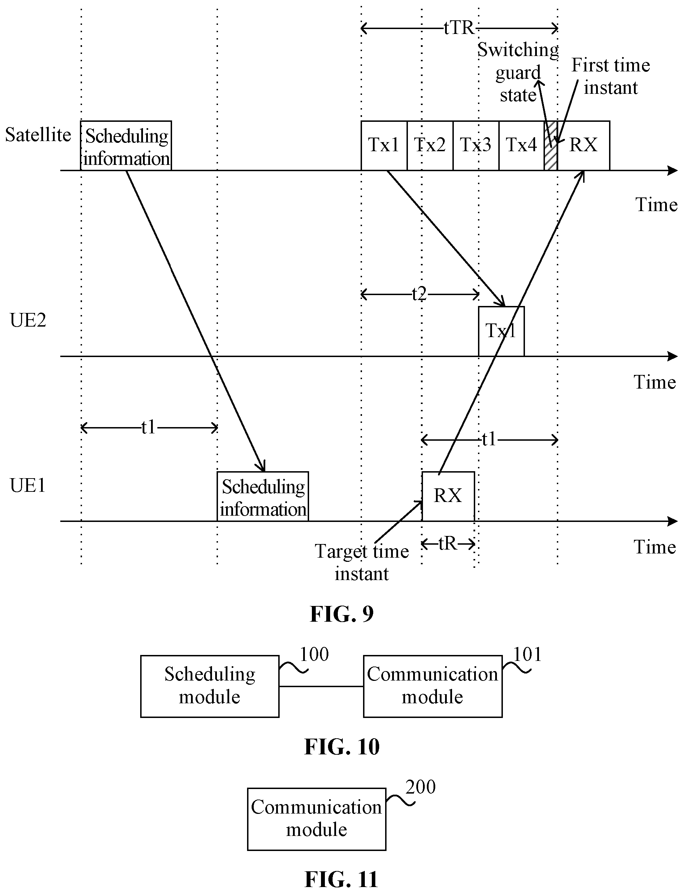

In example three, the process in which UE1 sends data and the process in which UE2 receives data affect each other, and the target time instant is earlier than the start time instant at which UE2 receives data sent by the satellite using the target carrier frequency. FIG. 8 is a diagram of another interaction procedure of scheduling information according to an embodiment. FIG. 9 is another scheduling timing diagram according to an embodiment. As shown in FIG. 8 and FIG. 9, the interaction procedure of scheduling information includes S501 to S509.

In S501, UE1 sends coordinate information of UE1 to the satellite, and UE2 sends coordinate information of UE2 to the satellite.

The coordinate information may be GPS positioning coordinates, relative coordinates of the communication node relative to the space communication node, or longitude and latitude coordinates. The embodiments of the present application impose no limitation thereon.

In S502, the satellite receives the coordinate information of UE1 and the coordinate information of UE2.

No temporal precedence exists between the time instant at which UE1 sends the coordinate information of UE1 to the satellite and the time instant at which UE2 sends the coordinate information of UE2 to the satellite. No temporal precedence exists between the time instant at which the satellite receives the coordinate information of UE1 and the time instant at which the satellite receives the coordinate information of UE2.

From the perspective of the satellite, the satellite may be in any one of a transmitting state, a receiving state, or a switching guard state. The switching guard state includes two cases, that is, switching from the transmitting state to the receiving state and switching from the receiving state to the transmitting state. The switching guard state shown in FIG. 9 is the case of switching from the transmitting state to the receiving state.

In S503, the satellite determines a third distance L3 according to the coordinate information of UE1 and the coordinate information of UE2.

The third distance L3 is the distance between UE1 and UE2. Since example three is directed to the scenario where the process in which UE1 sends data and the process in which UE2 receives data affect each other, the third distance L3 in example three is less than the preset threshold.

In S504, the satellite determines the target time instant according to a first distance L1, a second distance L2, a preset time interval tTR, and a first time instant.

The first distance L1 is the distance between UE1 and the satellite. The second distance L2 is the distance between UE2 and the satellite. The preset time interval tTR is the time interval from the time instant at which the satellite sends data to UE2 to the time instant at which the satellite switches to the receiving state. The first time instant is the time instant at which the satellite receives data sent by UE1. The target time instant is a time instant in the process during which the satellite sends data Tx1 to UE2 using the target carrier frequency.

Exemplarily, for the scenario where the target time instant is earlier than the start time instant at which UE2 receives data sent by the satellite using the target carrier frequency, the preset time interval tTR is less than or equal to a difference between the sum of a first delay t1 and a second delay t2 and a second data time length tR, that is, tTR ≤ t1 + t2 - tR.

In S505, the satellite generates scheduling information. The scheduling information is used to instruct UE1 to send data RX to the satellite using the target carrier frequency at the target time instant.

In S506, the satellite sends the scheduling information to UE1.

As can be seen from FIG. 9, the time instant of sending the scheduling information is earlier than the time instant at which the satellite sends data Tx1 to UE2 using the target carrier frequency.

In S507, UE1 receives the scheduling information sent by the satellite.

In S508, UE1 sends data RX to the satellite using the target carrier frequency at the target time instant according to the scheduling information.

In S509, the satellite receives data RX sent by UE1 using the target carrier frequency at the target time instant.

The time instant at which the satellite receives data RX is the first time instant.

As shown in FIG. 9, data Tx1 is the data sent by the satellite to UE2 using the target carrier frequency, where one or more UE2 may be provided. The second delay t2 represents the communication delay (also referred to as the propagation delay) between the satellite and UE2, and the second delay t2 is determined according to the second distance L2. Data Rx is the data sent by UE1 to the satellite using the target carrier frequency. The first delay t1 represents the communication delay between the satellite and UE1, and the first delay t1 is determined according to the first distance L1. The second data time length tR is the time length for which the UE1 sends data Rx to the satellite using the target carrier frequency.

For devices in the wireless communication system other than UE2, since they do not need to receive Tx1, the satellite in the transmitting state may determine UE1 from these devices and schedule UE1.

In this example, the value of the preset threshold may be determined according to the communication environment. Since the process in which UE1 sends data and the process in which UE2 receives data affect each other, the target time instant is set earlier than the start time instant at which UE2 receives the data sent by the satellite using the target carrier frequency, thereby avoiding the generation of interference.

Similarly, for data Tx2 to data Tx4 in FIG. 9, the methods in example one to example three of this embodiment may be used for processing. For example, when data Tx2 to data Tx4 are data sent to UE3 and the distance between UE3 and UE1 is greater than or equal to the preset threshold, the method of example one in this embodiment may be used for scheduling.

FIG. 10 is a diagram illustrating the structure of a scheduling information transmission apparatus according to an embodiment. The apparatus may be configured in a space communication node. As shown in FIG. 10, the apparatus includes a scheduling module 100 and a communication module 101.

The scheduling module 100 is configured to determine scheduling information, where the scheduling information is used to instruct a first communication node to send data to the space communication node using a target carrier frequency at a target time instant, and the target time instant is a time instant in a process during which the space communication node sends data to a second communication node using the target carrier frequency. The communication module 101 is configured to send the scheduling information to the first communication node.

The scheduling information transmission apparatus provided in this embodiment is configured to perform the scheduling information transmission method in the embodiment shown in FIG. 2. The implementation principles and technical effects of the scheduling information transmission apparatus provided by this embodiment are similar to those of the preceding embodiments and are not repeated herein.

In an embodiment, the time instant of sending the scheduling information is earlier than a time instant at which the space communication node sends the data to the second communication node using the target carrier frequency.

In an embodiment, the scheduling module 100 is also configured to acquire location information related to at least one candidate communication node, determine distance information related to the at least one candidate communication node according to the location information related to the at least one candidate communication node, and determine the first communication node from the at least one candidate communication node according to the distance information related to the at least one candidate communication node, where location information related to a candidate communication node includes coordinate information of the candidate communication node, and distance information related to the candidate communication node includes a distance between the candidate communication node and the space communication node; or location information related to a candidate communication node includes coordinate information of the candidate communication node and coordinate information of the second communication node, and distance information related to the candidate communication node includes a distance between the candidate communication node and the space communication node and a distance between the candidate communication node and the second communication node.

In an embodiment, the scheduling module 100 is also configured to acquire a third distance, where the third distance is a distance between the first communication node and the second communication node, and determine the target time instant according to the third distance, a first distance, and a first time instant, where the first distance is a distance between the first communication node and the space communication node, and the first time instant is a time instant at which the space communication node receives the data sent by the first communication node.

In an embodiment, the scheduling module 100 is configured to, in a case where the third distance is greater than or equal to a preset threshold, determine the target time instant according to the first distance and the first time instant.

In an embodiment, the scheduling module 100 is configured to, in a case where the third distance is less than a preset threshold, determine the target time instant according to the first distance, a second distance, a preset time interval, and the first time instant, where the second distance is a distance between the second communication node and the space communication node, and the preset time interval is a time interval from a time instant at which the space communication node sends data to the second communication node to a time instant at which the space communication node switches to a receiving state.

In an embodiment, when the target time instant is later than an end time instant at which the second communication node receives the data sent by the space communication node using the target carrier frequency, the preset time interval is greater than or equal to the sum of a first delay, a second delay, and a first data time length; when the target time instant is earlier than a start time instant at which the second communication node receives the data sent by the space communication node using the target carrier frequency, the preset time interval is less than or equal to a difference between the sum of the first delay and the second delay and a second data time length, where the first delay is a communication delay between the first communication node and the space communication node, the second delay is a communication delay between the second communication node and the space communication node, the first data time length is a time length for which the space communication node sends the data to the second communication node using the target carrier frequency, and the second data time length is a time length for which the first communication node sends the data to the space communication node using the target carrier frequency.

In an embodiment, the communication module 101 is also configured to receive the data sent by the first communication node using the target carrier frequency at the target time instant.

FIG. 11 is a diagram illustrating the structure of a scheduling information receiving apparatus according to an embodiment. The apparatus may be configured in a first communication node. As shown in FIG. 11, the apparatus includes a communication module 200.

The communication module 200 is configured to receive scheduling information sent by a space communication node, where the scheduling information is used to instruct the first communication node to send data to the space communication node using a target carrier frequency at a target time instant, and the target time instant is a time instant in a process during which the space communication node sends data to a second communication node using the target carrier frequency.

The scheduling information receiving apparatus provided in this embodiment is configured to perform the scheduling information receiving method in the embodiment shown in FIG. 3. The implementation principles and technical effects of the scheduling information receiving apparatus provided by this embodiment are similar to those of the preceding embodiments and are not repeated herein.

In an embodiment, the communication module 200 is also configured to send the data to the space communication node using the target carrier frequency at the target time instant according to the scheduling information.

In an embodiment, the communication module 200 is also configured to send coordinate information of the first communication node to the space communication node.

Embodiments of the present application also provide a communication node. The communication node includes a processor, which is configured to, when executing a computer program, perform the method provided in any embodiment of the present application. The communication node may be a space communication node or a first communication node. Exemplarily, the space communication node may be any device having a radio transceiving function and deployed in the air as provided in any of the embodiments of the present application, such as an airplane, a balloon, a satellite, a drone, and an airship. The embodiments of the present application impose no limitation thereon. The first communication node may be any terminal device provided in the embodiments of the present application, such as a UE. The embodiments of the present application impose no limitation thereon.

Exemplarily, the following embodiments separately provide a diagram illustrating the structure of a communication node as a satellite and a UE.

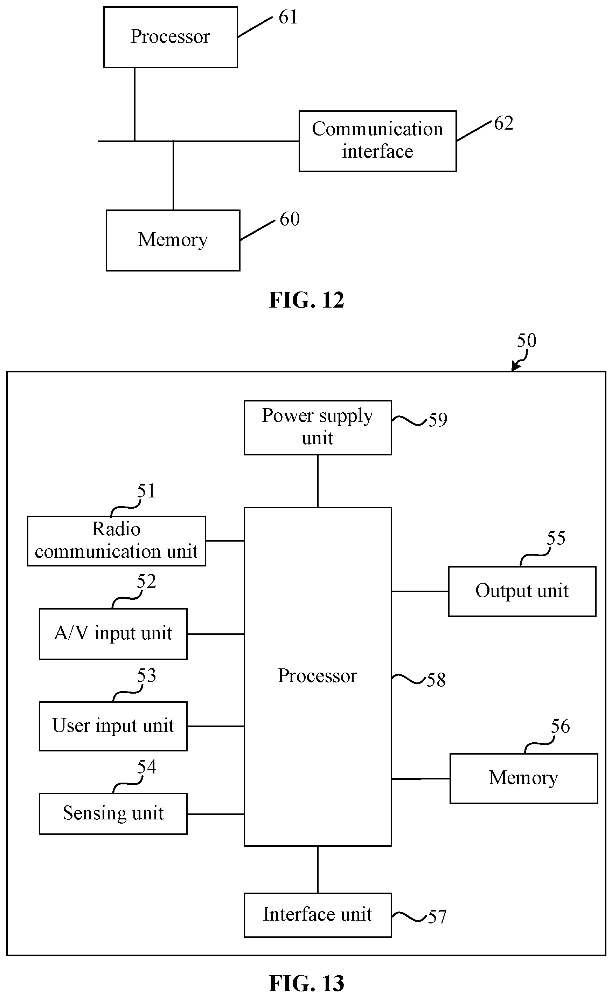

FIG. 12 is a diagram illustrating the structure of a satellite according to an embodiment. As shown in FIG. 12, the satellite includes a processor 60, a memory 61, and a communication interface 62. One or more processors 60 may be provided in the satellite, and one processor 60 is shown as an example in FIG. 12. The processor 60, the memory 61, and the communication interface 62 in the satellite may be connected through a bus or in other manners. In FIG. 12, the connection through a bus is shown as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the methods in the embodiments of the present application. The processor 60 runs the software programs, instructions, and modules stored in the memory 61 to execute at least one of function applications and data processing of the satellite, that is, to implement the preceding methods.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the satellite via a network. Examples of the preceding network include but are not limited to, the Internet, an intranet, a network, a communication network, and a combination thereof.

The communication interface 62 may be configured to receive and send data.

FIG. 13 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a PDA, a Portable Device (PAD), a Portable Multimedia Player (PMP), a navigation apparatus, a vehicle-mounted terminal device, a vehicle-mounted display terminal, and a vehicle-mounted electronic rearview mirror and fixed terminal devices such as a digital Television (TV) and a desktop computer.

As shown in FIG. 13, a UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 13 illustrates the UE including multiple components; but it is to be understood that not all illustrated components are required to be implemented. More or fewer components may be implemented instead.

In this embodiment, the radio communication unit 51 allows radio communication between the UE 50 and a satellite or a network. The A/V input unit 52 is configured to receive audio or video signals. The user input unit 53 may generate key input data based on commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application also provide a computer-readable storage medium. The computer-readable storage medium is configured to store a computer program which, when executed by a processor, implements the method provided by any one of the embodiments of the present application.

A computer storage medium in the embodiments of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a Random Access Memory (RAM), a Read-Only Memory (ROM), an Electrically Erasable Programmable Read-Only Memory (EPROM), a flash memory, an optical fiber, a portable Compact Disk Read-Only Memory (CD-ROM), an optical memory, a magnetic memory or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and Radio Frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a Local Area Network (LAN) or a Wide Area Network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, Instruction Set Architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a ROM, a RAM, and an optical memory apparatus and system (a Digital Video Disc (DVD) or a Compact Disk (CD)). The computer-readable medium may include a non-transitory storage medium. The data processor may be of any type suitable to the local technical environment, such as, but is not limited to, a general purpose computer, a special purpose computer, a microprocessor, a Digital Signal Processing (DSP), an Application Specific Integrated Circuit (ASIC), a Field-Programmable Gate Array (FPGA), and a processor based on a multi-core processor architecture.

## Claims

1. A scheduling information transmission method, the method being applied to a space communication node and comprising:
determining scheduling information, wherein the scheduling information is used to instruct a first communication node to send data to the space communication node using a target carrier frequency at a target time instant, and the target time instant is a time instant in a process during which the space communication node sends data to a second communication node using the target carrier frequency; and
sending the scheduling information to the first communication node.

2. The scheduling information transmission method according to claim 1, wherein a time instant of sending the scheduling information is earlier than a time instant at which the space communication node sends the data to the second communication node using the target carrier frequency.

3. The scheduling information transmission method according to claim 1, wherein before determining the scheduling information, the method further comprises:
acquiring location information related to at least one candidate communication node;
determining distance information related to the at least one candidate communication node according to the location information related to the at least one candidate communication node; and
determining the first communication node from the at least one candidate communication node according to the distance information related to the at least one candidate communication node;
wherein location information related to a candidate communication node of the at least one candidate communication node comprises coordinate information of the candidate communication node, and distance information related to the candidate communication node comprises a distance between the candidate communication node and the space communication node; or location information related to a candidate communication node of the at least one candidate communication node comprises coordinate information of the candidate communication node and coordinate information of the second communication node, and distance information related to the candidate communication node comprises a distance between the candidate communication node and the space communication node and a distance between the candidate communication node and the second communication node.

4. The scheduling information transmission method according to claim 1 or 3, further comprising:
acquiring a third distance, wherein the third distance is a distance between the first communication node and the second communication node; and
determining the target time instant according to the third distance, a first distance, and a first time instant, wherein the first distance is a distance between the first communication node and the space communication node, and the first time instant is a time instant at which the space communication node receives the data sent by the first communication node.

5. The scheduling information transmission method according to claim 4, wherein determining the target time instant according to the third distance, the first distance, and the first time instant comprises:
in response to the third distance being greater than or equal to a preset threshold, determining the target time instant according to the first distance and the first time instant.

6. The scheduling information transmission method according to claim 4, wherein determining the target time instant according to the third distance, the first distance, and the first time instant comprises:
in response to the third distance being less than a preset threshold, determining the target time instant according to the first distance, a second distance, a preset time interval, and the first time instant, wherein the second distance is a distance between the second communication node and the space communication node, and the preset time interval is a time interval from a time instant at which the space communication node sends the data to the second communication node to a time instant at which the space communication node switches to a receiving state.

7. The scheduling information transmission method according to claim 6, wherein
in response to the target time instant being later than an end time instant at which the second communication node receives the data sent by the space communication node using the target carrier frequency, the preset time interval is greater than or equal to a sum of a first delay, a second delay, and a first data time length; and
in response to the target time instant being earlier than a start time instant at which the second communication node receives the data sent by the space communication node using the target carrier frequency, the preset time interval is less than or equal to a difference between a sum of the first delay and the second delay and a second data time length;
wherein the first delay is a communication delay between the first communication node and the space communication node, the second delay is a communication delay between the second communication node and the space communication node, the first data time length is a time length for which the space communication node sends the data to the second communication node using the target carrier frequency, and the second data time length is a time length for which the first communication node sends the data to the space communication node using the target carrier frequency.

8. The scheduling information transmission method according to claim 1, wherein after sending the scheduling information to the first communication node, the method further comprises:
receiving the data sent by the first communication node using the target carrier frequency at the target time instant.

9. A scheduling information receiving method, the method being applied to a first communication node and comprising:
receiving scheduling information sent by a space communication node, wherein the scheduling information is used to instruct the first communication node to send data to the space communication node using a target carrier frequency at a target time instant, and the target time instant is a time instant in a process during which the space communication node sends data to a second communication node using the target carrier frequency.

10. The scheduling information receiving method according to claim 9, wherein after receiving the scheduling information sent by the space communication node, the method further comprises:
sending the data to the space communication node using the target carrier frequency at the target time instant according to the scheduling information.

11. The scheduling information receiving method according to claim 9, wherein before receiving the scheduling information sent by the space communication node, the method further comprises:
sending coordinate information of the first communication node to the space communication node.

12. A communication node, comprising a processor configured to, when executing a computer program, implement the scheduling information transmission method according to any one of claims 1 to 8 or implement the scheduling information receiving method according to any one of claims 9 to 11.

13. A computer-readable storage medium storing a computer program, wherein when the computer program is executed by a processor, the scheduling information transmission method according to any one of claims 1 to 8 or the scheduling information receiving method according to any one of claims 9 to 11 is implemented.
